## Europäisches Patentamt
## European Patent Office
## Office européen des brevets

(11) Veröffentlichungsnummer: **0 288 023 B1**

# EUROPÄISCHE PATENTSCHRIFT

(45) Veröffentlichungstag der Patentschrift: **02.10.91**

(21) Anmeldenummer: **88106279.8**

(22) Anmeldetag: **20.04.88**

(51) Int. Cl.5: **E04D 3/36**, E04D 5/14, E04F 13/08

(54) **Befestigungselement.**

(30) Priorität: **24.04.87 DE 3713686**

(43) Veröffentlichungstag der Anmeldung:
**26.10.88 Patentblatt 88/43**

(45) Bekanntmachung des Hinweises auf die
Patenterteilung:
**02.10.91 Patentblatt 91/40**

(84) Benannte Vertragsstaaten:
**AT BE CH DE FR GB LI NL SE**

(56) Entgegenhaltungen:
**DE-A- 3 045 986**
**US-A- 3 340 761**
**US-A- 4 452 023**

(73) Patentinhaber: **FRIEDR. TRURNIT GMBH**
**Rahmedestrasse 161**
**W-5990 Altena(DE)**

(72) Erfinder: **Trurnit, Friedrich Wilhelm**
**Im Lissingsiepen 21**
**W-5990 Altena(DE)**

(74) Vertreter: **Schröter, Martin, Dipl.-Ing.**
**Im Tückwinkel 22**
**W-5860 Iserlohn(DE)**

## Beschreibung

Die Erfindung betrifft ein Befestigungselement für ein elastisches nachgiebiges Wärmeisoliermaterial, bestehend aus einer Haltescheibe aus Kunststoff mit einer in das Isoliermaterial eindringbaren rohrförmigen Vertiefung und einer durch den Boden der Vertiefung hindurchgreifenden, mit ihrem Kopf anliegenden Schraube, wobei in Fortsetzung der rohrförmigen Vertiefung achsparallele Stege aus Kunststoff angeformt sind.

Es ist ein solches Befestigungselement für ein elastisches nachgiebiges Wärmeisoliermaterial bekannt aus der US-A-4 452 023, bestehend aus einer Haltescheibe aus Kunststoff mit einer in das Isoliermaterial eindringbaren rohrförmigen Vertiefung und einer durch den Boden der Vertiefung hindurchgreifenden, mit ihrem Kopf anliegenden Schraube, die mit einem Dübelelement zusammenwirkt, wobei in Fortsetzung der rohrförmigen Vertiefung achsparallele Stege aus Kunststoff angeformt sind. Die Schraube greift beim Anziehen in ein Dübelelement im Untergrund ein und zieht das gesamte Befestigungselement unter Zusammendrückung des Wärmeisoliermaterials an, wobei die Kunststoffstege ausknicken. Nachteilig erweist sich dabei die Tatsache, daß das Wärmeisoliermaterial im Bereich der Haltescheibe zusammengedrückt wird und eine Vertiefung bildet. Eine solche Befestigung setzt außerdem die Anbringung eines Dübelelementes im Untergrund unter dem Wärmeisoliermaterial voraus.

Für den Fall, daß eine Einschraubung in einen Untergrund und damit der Einsatz eines Dübelelementes nicht möglich ist, also beispielsweise wenn unter dem Isoliermaterial ein Luftzwischenraum vorgesehen ist, läßt sich ein solches bekanntes Befestigungselement nicht verwenden.

Die Aufgabe der Erfindung besteht darin, ein Befestigungselement der genannten Art so zu gestalten, daß dessen Einsatz für ein elastisches nachgiebiges Wärmeisoliermaterial auch dann möglich ist, wenn ein Befestigungsuntergrund, in den eine Schraube eingreifen könnte, nicht vorhanden ist.

Gelöst wird die Erfindungsaufgabe mit einem Befestigungselement mit sämtlichen Merkmalen des Anspruches 1.

Bei entsprechender Verdrehung der Schraube des Befestigungselementes steigt die Gewindehülse auf der Schraubspindel in Richtung des Schraubenkopfes, die zwischen Gewindehülse und rohrförmiger Vertiefung angeformten Stege knicken bzw. beulen sich nach außen aus und kommen zur Anlage an der Unterseite des Unterbaues. Auf diese Weise kann das Befestigungselement den Aufbau verspannen bzw. an einer unter dem Isoliermaterial angeordneten Platte, beispielsweise einem Blech, befestigt werden.

Nach einer bevorzugten Ausführungsart der Erfindung sind die Kunststoffstege am Stirnende der rohrförmigen Vertiefung nach innen abgesetzt angeformt, wobei zweckmäßigerweise in Fortsetzung der rohrförmigen Vertiefung zwei sich gegenüberliegende Stege vorgesehen und die Stege quer zur Achsrichtung profiliert sind, um ein definiertes Ausbeulen bzw. Ausknicken zu erreichen. Die Kunststoffstege haben eine ausreichende Festigkeit bzw. Steifigkeit, so daß in bekannter Weise das Befestigungselement in und durch das Isoliermaterial gedrückt werden kann. Das Befestigungselement setzt mit seinem stirnseitigen Absatz auf einer Unterlage, beispielsweise einem Blech, auf, die angeformten Stege ragen durch eine Bohrung in der Unterlage in den darunter angeordneten freien Raum. Der Durchmesser der Gewindehülse, der die Stege verbindet und der äußeren Abstand der beiden Stege sind zweckmäßigerweise kleiner gewählt als der Außendurchmesser der rohrförmigen Vertiefung.

Ein solches erfindungsgemäßes Befestigungselement läßt sich in jeder Lage an einem Isoliermaterialaufbau, beispielsweise einem entsprechenden Dachaufbau mit Außenfolie, darunter angeordnetem Isoliermaterial und wiederum darunter vorgesehenem Blech einsetzen.

Anhand eines abgebildeten Ausführungsbeispiels wird die Erfindung im folgenden näher erläutert. Es zeigen:

Fig. 1    eine vergrößerte teilweise geschnittene Ansicht eines Befestigungselementes,

Fig. 2    eine weitere Seitenansicht auf das Element in Fig. 1.

Fig. 3    eine Einbausituation im Schnitt durch einen wärmeisolierenden Dachaufbau nach dem Einbringen des Befestigungselementes
und

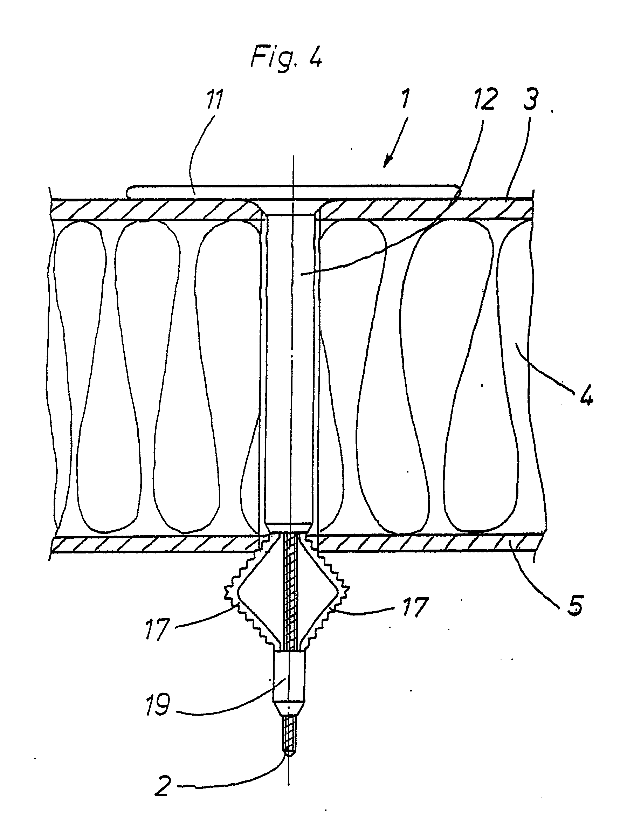

Fig. 4    eine Teildarstellung der in Fig. 3 dargestellten Situation während des Festspannens des Befestigungselementes.

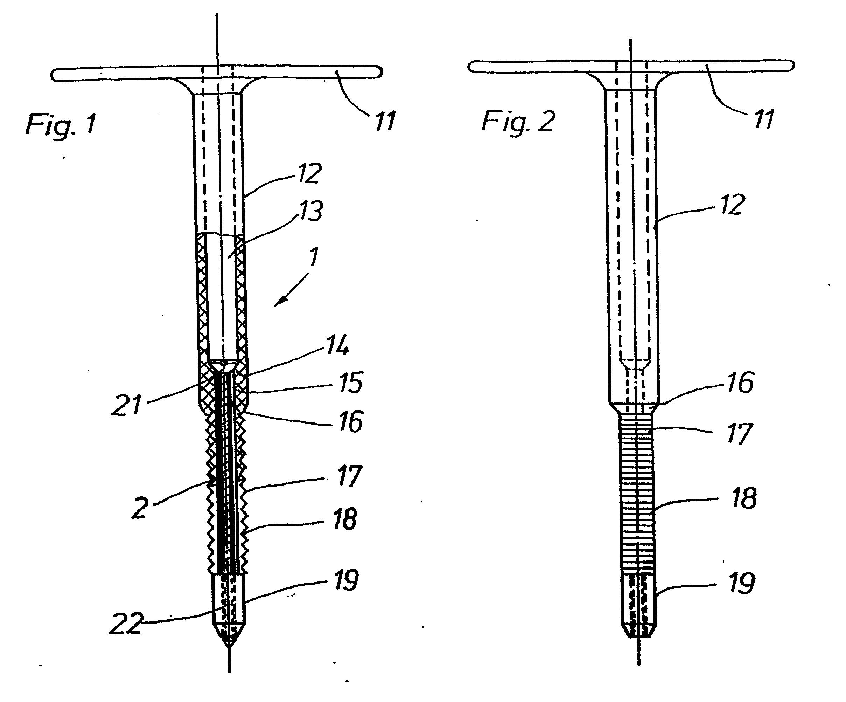

Zunächst wird auf die Figuren 1 und 2 Bezug genommen. An einer im Grundriß etwa rechteckigen Haltescheibe 11 aus Kunststoff des mit der Ziffer 1 bezeichneten Befestigungselementes ist mittig nach unten gerichtet eine rohrförmige Vertiefung 12 angeformt. Die Innenbohrung trägt die Ziffer 13. Der Boden dieser Vertiefung 12 ist mit einer durchmesserkleineren Bohrung 15 ausgestattet. Die Bohrung 13 geht mit einer konischen Fläche 14 in die Bohrung 15 über.

In Fortsetzung der rohrförmigen Vertiefung 12 sind nach innen abgesetzt zwei sich gegenüberliegende Stege 17 angeformt, die am anderen Ende durch die Gewindehülse 19 miteinander verbunden sind. Durch die abgesetzte Anformung der Kunststoffstege 17 ist der Absatz 16 außen gebildet. Die Stege 17 sind außen quer zur Achsrichtung mit Verkrallungselementen 18 profiliert.

Durch die Bohrung 13 in der rohrförmigen Vertiefung 12 ist von außen die mit einem Schraubendreher zugänglich die mit der Ziffer 2 bezeichnete Schraube eingeführt, die mit ihrem Kopf 21 innen an der konischen Fläche 14 anliegt, mit ihrem Schraubenschaft 22 durch die Bohrung 15 geführt ist und mit ihrem Schaftende in das Innengewinde der Gewindehülse 19 eingreift. Mittels selbstschneidender Schraube kann sich der Schraubenschaft in eine entsprechende Innenfläche einer Kunststoffhülse 19 einschneiden.

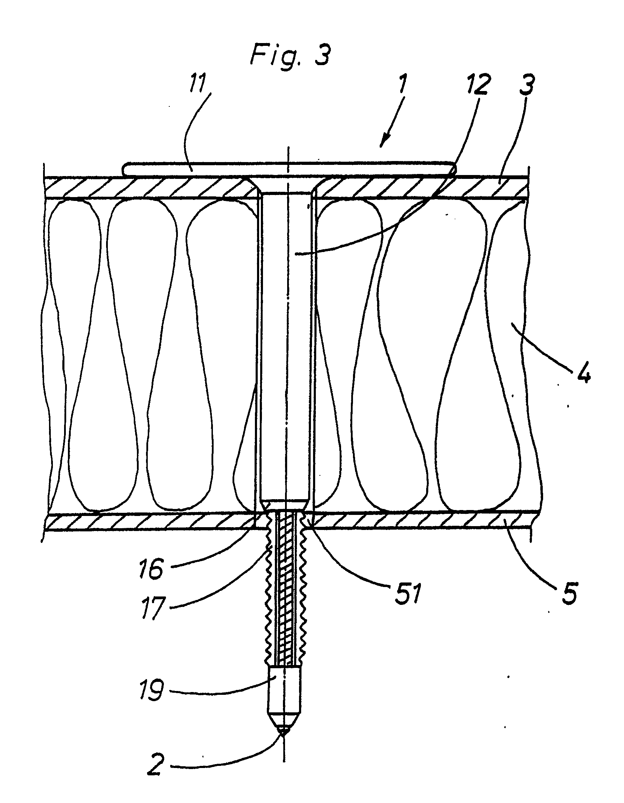

In Fig. 3 ist dargestellt, in welcher Weise ein solches Befestigungselement entsprechend den Figuren 1 und 2 in einen Isolieraufbau, beispielsweise eines Daches, eingebracht wird. Dazu wird zunächst in den Isolieraufbau eine Bohrung eingebracht, vorzugsweise mit einem etwas geringeren Durchmesser als der Außendurchmesser der rohrförmigen Vertiefung 12 im Bereich der oberen Kunststoffolie 3 und des darunter angeordneten Isoliermateriales 4. Die rohrförmige Vertiefung 12 setzt mit ihrem Absatz 16 auf dem mit der Ziffer 5 angedeuteten Blechplatte 5 auf. Durch die Bohrung 51 in dieser Blechplatte 5 ragen die Stege 17 mit der endseitigen verbindenden Kunststoffhülse 19 und der aufgenommenen Schraube 2 hindurch.

Erfolgt nun eine entsprechende Verdrehung der Schraube 2 durch Einsatz eines entsprechenden Schraubendrehers am Kopf 21, so steigt die Gewindehülse 19 auf dem Schaft 22 nach oben. Dabei werden die Kunststoffe 17 nach außen ausgebeult bzw. ausgeknickt. Begünstigt wird diese Ausknickung durch die entsprechende Profilierung 18 der Stege 17. Die sich ausbeulenden bzw. die ausknickenden Stege 17 legen sich von der Unterseite her an der Blechplatte 5 an, so daß sich das Befestigungselement 1 mit der Halteplatte 11 und den sich nach außen anliegenden Stegen 17 am gesamten Aufbau verspannt. Die Kunststoffolie 3 und das darunter angeordnete Isoliermaterial werden damit an der Blechplatte 5, die mit anderen Befestigungsmitteln an einem Untergrund befestigt ist, gehalten.

Es besteht auch die Möglichkeit, die durch die Kunststoffgewindehülse 19 hindurchgeführte Schraube auf ihrem freien Ende mit einer Mutter oder Gewindehülse zu versehen. Beim Anziehen der Schraube in entsprechende Richtung wird die Mutter oder die Gewindehülse auf den Schraubenkopf zubewegt. Dabei werden die Kunststoffstege 17 der Kunststoffgewindehülse 19, die in diesem Falle innen auch ohne Gewinde ausgeführt werden kann, ebenfalls nach außen ausgebeult bzw. ausgeknickt.

Zusammenstellung der Bezugszeichen

| | |
|---|---|
| 1 | Befestigungselement |
| 11 | Haltescheibe |
| 12 | rohrförmige Vertiefung |
| 13 | Bohrung |
| 14 | konischer Abschnitt |
| 15 | Bohrung |
| 16 | Absatz |
| 17 | Steg |
| 18 | Verkrallungselement |
| 19 | Gewindehülse |
| 2 | Schraube |
| 21 | Kopf |
| 22 | Schaft |
| 3 | Kunststoffolie |
| 4 | Isoliermaterial |
| 5 | Blechplatte |
| 51 | Bohrung |

**Patentansprüche**

1. Befestigungselement (1) für ein elastisches nachgiebiges Wärmeisoliermaterial, bestehend aus einer Haltescheibe (11) aus Kunststoff mit einer in das Isoliermaterial eindringbaren rohrförmigen Vertiefung (12) und einer durch den Boden der Vertiefung hindurchgreifenden, mit ihrem Kopf anliegenden Schraube (2), wobei in Fortsetzung der rohrförmigen Vertiefung (12) achsparallele Stege (17) aus Kunststoff angeformt sind, **dadurch gekennzeichnet,** daß die achsparallelen Stege (17) an ihrem äußeren Ende durch eine angeformte Kunststoffgewindehülse (19) verbunden sind, in die die Schraube (2) eingreift, so daß bei Verdrehung der Schraube (2) die in Richtung des Schraubenkopfes aufsteigende Kunststoffgewindehülse (19) ein Ausknicken und Verkrallen der Stege (17) bewirkt.

2. Befestigungselement nach Anspruch 1, **dadurch gekennzeichnet,** daß die Stege (17) am Stirnende (16) der rohrförmigen Vertiefung (12) nach innen abgesetzt angeformt sind.

3. Befestigungselement nach Anspruch 1, **dadurch gekennzeichnet,** daß in Fortsetzung der rohrförmigen Vertiefung (12) zwei sich gegenüberliegende Stege (17) angeformt sind.

4. Befestigungselement nach Anspruch 1, **dadurch gekennzeichnet,** daß die Stege (17) quer zur Achsrichtung profiliert sind.

5. Befestigungselement nach Anspruch 4, **dadurch gekennzeichnet,** daß die Stege (17, 18) außen mit Verkrallungselementen profiliert sind.

6. Befestigungselement nach Anspruch 1, **dadurch gekennzeichnet,** daß auf eine durch die Kunststoffgewindehülse (19) hindurchgeführte Schraube eine Mutter oder Gewindehülse von außen aufgeschraubt ist.

## Claims

1. Securing element (1) for an elastically resilient heat insulating material, comprising a retaining plate (11) formed from plastics material and having a tubular recess (12) provided therein, which is penetrable into the insulating material, and a screw (2), which extends through the base of the recess and abuts the base of the recess with its head, axis-parallel ribs (17) of plastics material being moulded as an extension of the tubular recess (12), characterised in that the axis-parallel ribs (17) are connected at their outer end by means of a moulded-on plastics material threaded sleeve (19) in which the screw (2) engages, so that, upon rotation of the screw (2), the plastics material threaded sleeve (19), which ascends towards the screw head, causes the ribs (17) to bend and grip.

2. Securing element according to claim 1, characterised in that the ribs (17) are moulded on the front end (16) of the tubular recess (12) in an inwardly stepped manner.

3. Securing element according to claim 1, characterised in that two oppositely situated ribs (17) are moulded as a continuation of the tubular recess (12).

4. Securing element according to claim 1, characterised in that the ribs (17) are profiled transversely relative to the axial direction.

5. Securing element according to claim 4, characterised in that the ribs (17, 18) are externally profiled with gripping elements.

6. Securing element according to claim 1, characterised in that a nut or threaded sleeve is screwed from externally onto a screw, which extends through the plastics material threaded sleeve (19).

## Revendications

1. Elément de Fixation (1) pour un matériau d'isolation thermique élastiquement déformable, se composant d'un disque de retenue (11) en matière plastique pourvu d'une partie en creux (12) de forme tubulaire pouvant pénétrer dans le matériau isolant et d'une vis (2) traversant le fond de la partie en creux (12) et s'appliquant par sa tête contre ce fond, des branches (17) en matière plastique étant formées dans le prolongement de la partie en creux de forme tubulaire parallèlement à son axe, caractérisé en ce que les branches (17) parallèles à l'axe sont reliées à leur extrémité extérieure par une douille filetée (19) formée de matière plastique et dans laquelle s'accroche la vis (2) de telle sorte que, lors de la rotation de la vis (2), la douille filetée (19) en matière plastique, montant en direction de la tête de vis, produise un flambage et un ancrage des branches (17).

2. Elément de fixation selon la revendication 1, caractérisé en ce que les branches (17) sont formées avec décrochement vers l'intérieur à l'extrémité frontale (16) de la partie en creux (12) de forme tubulaire.

3. Elément de fixation selon la revendication 1, caractérisé en ce que dans le prolongement de la partie en cieux (12) de forme tubulaire sont formées deux branches (17) situées l'une en regard de l'autre.

4. Elément de fixation selon la revendication 1, caractérise en ce que les branches (17) sont profilées perpendiculairement à la direction axiale.

5. Elément de fixation selon la revendication 4, caractérise en ce que les branches (17, 18) sont profilées extérieurement avec les éléments d'ancrage.

6. Elément de fixation selon la revendication 1, caractérisé en ce qu'un écrou ou une douille filetée peut être vissé de l'extérieur sur une vis engagée à travers la douille filetée (19) en matière plastique.

EP 0 288 023 B1

Fig. 2

Fig. 1

·5

EP 0 288 023 B1

# Fig. 3

6

Fig. 4